**Europäisches Patentamt**

**European Patent Office**

**Office européen des brevets**

(19)

(11) Numéro de publication : **0 467 789 A1**

(12) # DEMANDE DE BREVET EUROPEEN

(21) Numéro de dépôt : **91402011.0**

(22) Date de dépôt : **18.07.91**

(51) Int. Cl.⁵ : **A01G 27/00**

(30) Priorité : **20.07.90 FR 9009326**

(43) Date de publication de la demande :
**22.01.92 Bulletin 92/04**

(84) Etats contractants désignés :
**BE CH DE DK ES FR GB IT LI LU NL**

(71) Demandeur : **BOUILLARD FRERES S.A.,**
**Société anonyme dite:**
**F-71370 Saint-Germain du Plain (FR)**

(72) Inventeur : **Bouillard, Jean-Jacques**
**Le Grand Saint Germain**
**F-71370 Saint-Germain du Plain (FR)**

(74) Mandataire : **Ohayon, Joseph et al**
**Cabinet Jolly 54, rue de Clichy**
**F-75009 Paris (FR)**

(54) **Bac à irrigation alternée automatique des plantes.**

(57)    Ce bac comporte un réservoir d'eau (9) alimentant par un moyen de débit d'eau approprié (13), par exemple goutte à goutte, un récipient (11) à réserve d'eau d'alimentation périodique des plantes (3) distribuée par l'intermédiaire d'un dispositif à siphon (17). Le récipient à réserve d'eau (11) est disposé enterré dans le milieu support des plantes (5) (terre), en sorte que l'irrigation des plantes par ledit dispositif à siphon (17) est effectuée directement au sein du milieu de culture (5) à chaque fois que la réserve d'eau a atteint un certain niveau dans son récipient (11) et se vide par l'intermédiaire du dispositif à siphon (17).

EP 0 467 789 A1

Jouve, 18, rue Saint-Denis, 75001 PARIS

L'invention concerne un bac à plantes, d'intérieur ou d'extérieur, du type comportant un dispositif d'irrigation automatique alternée des plantes, ce dispositif comportant un réservoir d'eau alimentant par un moyen de débit d'eau approprié, par exemple goutte à goutte, un récipient à réserve d'eau d'alimentation périodique des plantes distribuée par l'intermédiaire d'un dispositif à siphon.

On connaît par le certificat d'utilité n° 2 572 251 un bac à plantes comportant un dispositif d'irrigation automatique alternée, positionné au dessus des plantes, porté par le bac proprement dit, ce dispositif comportant un réservoir d'eau alimentant par un moyen de débit d'eau (pompe ou mèche de capillarité) un récipient à réserve d'eau, par lequel est distribuée périodiquement par un dispositif de siphon disposé à l'intérieur une certaine quantité d'eau aux plantes, l'irrigation étant effectuée sous forme d'aspersion d'eau en cascade ou pluie sur le milieu contenant les plantes ou sur les plantes elles mêmes.

L'invention propose un bac comportant des moyens similaires à celui précité mais dont le mode d'irrigation est différent.

On connait également par US-A-4 291 836 un dispositif d'irrigation de plantes qui est indépendant du bac support des plantes et qui ne prévoit pas d'irrigation au sein du milieu de culture. Ce dispositif n'est pas intégré au bac support.

Par ailleurs, FR-A-2 322 533 et US-A-4 115 951 décrivent des dispositifs d'irrigation continue des plantes.

L'invention a pour objet un dispositif d'irrigation alternée automatique des plantes qui est parfaitement intégré au bac support.

Le bac à irrigation automatique alternée des plantes selon l'invention est en effet caractérisé en ce que ledit récipient à réserve d'eau est disposé enterré dans le milieu support des plantes (terre), en sorte que l'irrigation des plantes par ledit dispositif à siphon est effectuée directement au sein du milieu de culture à chaque fois que la réserve d'eau a atteint un certain niveau dans son récipient et se vide par l'intermédiaire du dispositif à siphon, le réservoir d'eau étant disposé au-dessus du récipient à réserve d'eau et logé à l'intérieur du bac, par exemple maintenu le long de sa paroi.

De façon avantageuse, le fond du récipient à réserve d'eau par lequel s'écoule l'eau au moyen dudit dispositif à siphon est situé sensiblement à mi-hauteur du bac, là où se trouvent de façon générale les racines des plantes. Il résulte donc de cette disposition que l'on alimente directement par capillarité au sein du milieu les racines des plantes. L'alimentation périodique en eau des plantes grâce au dispositif de siphon se vidant dès que la réserve atteint un certain niveau, contribue à favoriser une saine végétation des plantes, évitant ainsi les pourritures et moisissures induites dans les bacs à réserve permanente connus. Les plantes ont en effet besoin de périodes sèches pour que leur croissance soit bonne.

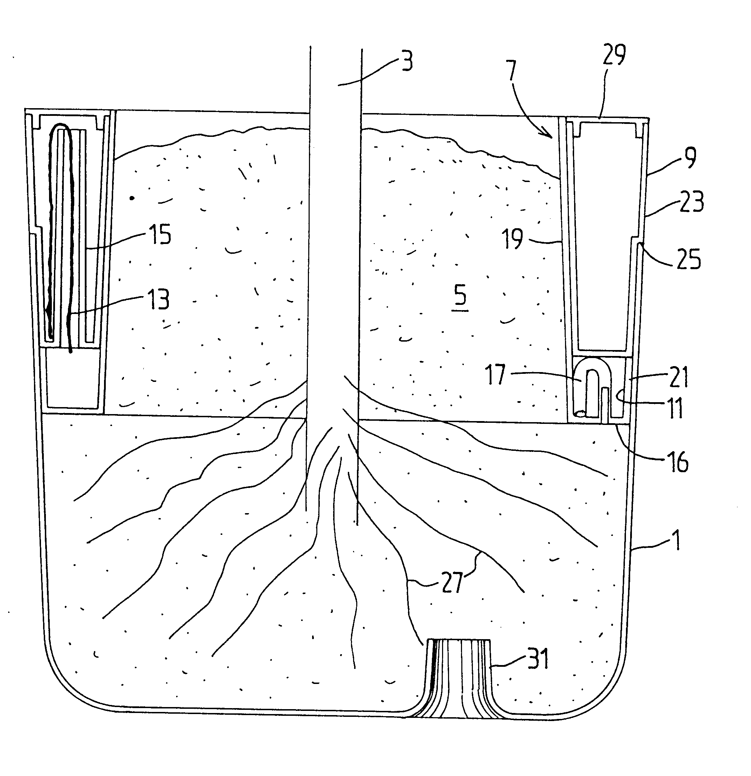

L'invention est illustrée ci-après à l'aide d'un exemple de réalisation et en référence au dessin annexé sur lequel :

La figure unique est une vue en coupe transversale d'un bac à irrigation alternée selon l'invention.

Avec référence à cette figure, un bac de conformation cylindrique selon l'invention comporte un récipient de culture 1 proprement dit contenant les plantes 3 et leur milieu support de culture 5 (terre) et un dispositif d'irrigation alternative des plantes 7 porté latéralement sur le récipient 1 sur toute sa périphérie et à l'intérieur de celui-ci.

Ce dispositif d'irrigation comporte un réservoir amovible supérieur 9 et un récipient inférieur 11 formant réserve d'eau d'alimentation périodique des plantes et alimenté par le réservoir supérieur. Ce récipient est alimenté par l'intermédiaire d'un système goutte à goutte, tel qu'une mèche de capillarité 13 disposée sur une cheminée centrale verticale 15 formée sur le réservoir supérieur et au dessus du récipient à réserve d'eau 11.

Le récipient à réserve d'eau 11 comporte un fond 16 plat sur lequel est fixé un dispositif de siphon 17. Ce fond est disposé sensiblement dans la partie médiane du bac. Sa paroi interne 19 s'étend verticalement jusqu'au niveau supérieur du réservoir amovible, lequel entoure complètement (ou non) la paroi du bac, délimitant ainsi la paroi supérieure de contention du milieu de culture des plantes 5 (terre). Sa paroi la plus externe 21 s'appuie sur la paroi du bac 1 par effet de serrage sur cette dernière du fait de sa forme évasée. Le réservoir amovible 9 est logé entre la paroi sensiblement verticale 19 du récipient à réserve d'eau -sa paroi interne s'appuyant sur elle par toute sa hauteur- et la paroi du récipient de culture. Il est en fait porté par la paroi du récipient de culture, laquelle s'étend à mi-hauteur de sa paroi externe 23, celle-ci comportant un épaulement 25 sensiblement à mi hauteur par lequel elle s'appuie sur l'extrémité de la paroi du récipient de culture. L'appui de ce réservoir peut également être réalisé par des nervures formées sur le récipient de culture.

La distribution périodique d'eau aux plantes est assurée par le dispositif de siphon 17, lequel est un simple tuyau coudé en U inversé, fixé sur le fond 16 du récipient à réserve d'eau et dont la sortie débouche dans le milieu de culture. Ce dispositif fonctionne naturellement dès que la réserve d'eau a atteint le niveau supérieur du tuyau. L'eau injectée se répand par capillarité au sein du milieu jusqu'aux racines 27 des plantes contenues dans le bac.

On notera encore à titre accessoire que le réservoir amovible est fermé à sa partie supérieure par un couvercle amovible 29 protégeant l'eau contenue de toute pollution par le milieu extérieur. Ce couvercle permet naturellement le remplissage du réservoir et il sera de préférence transparent pour visualiser le niveau d'eau disponible dans le réservoir. En outre, le fond du récipient de culture est muni d'un puits 31 servant de trop plein de sécurité.

De nombreuses variantes sont imaginables dans le cadre du principe de l'invention.

Ainsi dans l'exemple représenté, le dispositif d'irrigation a été intégré dans sa forme à celle du bac pour former un ensemble de bac harmonieux mais rien n'empêche qu'il forme une structure autonome que l'on pourrait accrocher à la paroi du bac à culture par un dispositif de maintien ou de crochetage adéquat, cette structure avec ses réservoirs étant conformée rectiligne ou arrondi à volonté selon la conformation des bacs à équiper.

**Revendications**

1.  Bac à plantes, d'intérieur ou d'extérieur, du type comportant un dispositif d'irrigation automatique alternée des plantes, ce dispositif comportant un réservoir d'eau (9) alimentant par un moyen de débit d'eau approprié (13), par exemple goutte à goutte, un récipient (11) à réserve d'eau d'alimentation périodique des plantes (3) distribuée par l'intermédiaire d'un dispositif à siphon (17), caractérisé en ce que ledit récipient à réserve d'eau (11) est disposé enterré dans le milieu support des plantes (5) (terre), en sorte que l'irrigation des plantes par ledit dispositif à siphon (17) est effectué directement au sein du milieu de culture (5) à chaque fois que la réserve d'eau a atteint un certain niveau dans son récipient (11) et se vide par l'intermédiaire du dispositif à siphon (17), le réservoir d'eau (9) étant disposé au-dessus du récipient à réserve d'eau (11) et logé à l'intérieur du bac, par exemple maintenu le long de sa paroi.

2.  Bac à plantes selon la revendication 1, caractérisé en ce que le fond (16) du récipient à réserve d'eau (11) par lequel s'écoule l'eau au moyen dudit dispositif à siphon (17) est situé sensiblement à mi-hauteur du bac.

3.  Bac à plantes selon la revendication 1 ou 2, caractérisé en ce que le réservoir d'eau (9) est amovible.

4.  Bac à plantes selon l'une des revendications précédentes, caractérisé en ce que le réservoir d'eau (9) comporte un couvercle de fermeture (29) amovible de préférence transparent.

5.  Bac à plantes selon l'une des revendications précédentes, caractérisé en ce que le réservoir d'eau (9) comporte une cheminée centrale (15) en communication avec le récipient à réserve d'eau (11) et sur laquelle est disposée une mèche (13) alimentant par capillarité ledit récipient à réserve d'eau (11).

6.  Bac à plantes selon la revendication 1, caractérisé en ce qu'il comporte un dispositif d'irrigation (7) de structure autonome, fixé ou accroché à la paroi du bac.

7.  Bac à plantes selon la revendication 6, caractérisé en ce que ledit dispositif d'irrigation (7) a une forme quelconque, par exemple arrondie ou rectiligne selon la conformation du bac à équiper.

**Office européen des brevets**

# RAPPORT DE RECHERCHE EUROPEENNE

Numero de la demande

EP 91 40 2011

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| D,A | US-A-4 291 836 (WU CHEN-HSIUNG)<br>* le document en entier * | 1,4 | A01G27/00 |
| D,A | FR-A-2 322 533 (GROSFILLEX)<br>* page 1, ligne 35 - page 3, ligne 18; figures 1,2 * | 1,3 | |
| D,A | US-A-4 115 951 (BECKER)<br>* colonne 3, ligne 1 - colonne 5, ligne 17; figures 1-6 * | 1,4,6,7 | |
| D,A | FR-A-2 572 251 (OU YOUNG)<br>* page 3, ligne 19 - page 5, ligne 16; figures 1,2 * | 1 | |
| A | FR-A-470 151 (DRAGENDORF)<br>* le document en entier * | 2 | |
| A | EP-A-0 126 574 (QUINN)<br>* abrégé; figure 2 * | 5 | |

**DOMAINES TECHNIQUES RECHERCHES (Int. Cl.5 )**

A01G

Le présent rapport a été établi pour toutes les revendications

| Lieu de la recherche | Date d'achèvement de la recherche | Examinateur |
|---|---|---|
| LA HAYE | 04 OCTOBRE 1991 | HERYGERS J.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)